# EUROPEAN PATENT APPLICATION

(11) **EP 3 048 769 A1**
(43) Date of publication of application: **27.07.2016**
(21) Application number: 15152573.0
(22) Date of filing: 26.01.2015
(51) Int. Cl.: H04L 29/06

(54) **An identity authentication system and method to prevent phishing attacks**

(71) Applicant: Kilcullen, Joseph, Co. Galway (IE)
(72) Inventor: Kilcullen, Joseph, Co. Galway (IE)
(74) Representative: Tomkins & Co

(57) **Abstract**

A system (100) suitable for communicating between a first communications device (103) and a second communications device (102). The system (100) comprises means for storing a shared secret data locally on the first communications device (103). The system (100) comprises means for requesting authenticated data from an identity authentication system (104). The identity authentication system (104) comprises means for transmitting the authenticated data to the first communications device (103). The first communications device (103) comprises means for simultaneously delivering the shared secret data and the authenticated data to a user (101) of the first communications device (103). The first communications device (103) comprises means for the user (101) of the first communications device (103) to accept the shared secret data and the authenticated data. The first communications device (103) comprises means for, responsive to acceptance of the shared secret data and the authenticated data, transmitting secure communications data between the first communications device (103) and the second communications device (102).

## Description

### Introduction

### Field of the Invention

This invention relates to a method of communicating between a first communications device and a second communications device. The present invention generally relates to communications between a device and a human being over a communications network. In particular this invention relates to an identity authentication system and to a method to prevent against phishing attacks. Specifically, the present invention relates to an additional authentication process to prevent the communications from being the victim of a phishing attack.

### Background to the Invention

A phishing attack is a type of internet fraud which involves creating a counterfeit website and tricking users into using the counterfeit website. The purpose of phishing attacks is to steal computer user's login details, mainly from internet commerce websites and banks. The user's login details usually consist of a username and password, however, websites may only request some, but not all, of a customer's password. As a result, one successful phishing attack is not enough to compromise a customer's account.

The existing system for authenticating website ownership is Transport Layer Security (TLS), formerly known as Secure Sockets Layer (SSL). There are two best practice rules for users to follow, in order to avoid a phishing attack. First, users may check that TLS is being used. This can be done by looking for the letter 's' to be found in 'https://' at the start of the URL, which is usually found in the browser address bar. Second, users may inspect the contents of the TLS Certificate in order to ensure that they are communicating with the correct person or organization. Many phishing attacks do not use a TLS certificate. For example, one type of attack which is used to bypass security features on a second party's website is referred to as a Man-in-The-Middle (MitM) attack. MitM attacks can be used to 'strip out' the TLS protection by presenting the user with the actual and correct website, without TLS being present. This may happen by criminals interacting with the website, on the user's behalf. Since the criminals have access to the website-user dialogue, without encryption, the criminals may see the user's login details.

### Statements of Invention

According to the invention there is provided a method of communicating between a first communications device and a second communications device, comprising:
delivering a shared secret data to a user of the first communications device, the shared secret data being stored locally on the first communications device;
delivering authenticated data to the user of the first communications device; and
responsive to acceptance of the shared secret data and the authenticated data by the user of the first communications device, transmitting secure communications data between the first communications device and the second communications device.

In one embodiment of the invention the shared secret data and the authenticated data are delivered simultaneously to the user of the first communications device. The authenticated data may comprise a domain internet address. The authenticated data may comprise a real world address.

In one case the method comprises the step of requesting the authenticated data from an identity authentication system. The first communications device may request the authenticated data from the identity authentication system. The second communications device may request the authenticated data from the identity authentication system. Preferably the identity authentication system transmits the authenticated data to the first communications device.

In another embodiment the method comprises the step of storing the shared secret data locally on the first communications device.

In another case delivering the shared secret data comprises displaying the shared secret data. Preferably acceptance of the shared secret data and the authenticated data by the user of the first communications device comprises receiving user input from the user of the first communications device. Ideally the shared secret data comprises image data, and/or audio data, and/or text data, and/or video data, and/or haptic data.

The invention also provides in another aspect a system for communicating between a first communications device and a second communications device, comprising:
means for delivering a shared secret data to a user of the first communications device, the shared secret data being stored locally on the first communications device;
means for delivering authenticated data to the user of the first communications device; and
means for, responsive to acceptance of the shared secret data and the authenticated data by the user of the first communications device, transmitting secure communications data between the first communications device and the second communications device.

In one embodiment of the invention the system comprises means to receive user input from a user of the first communications device.

In a further aspect of the invention there is provided a computer program product comprising computer program code capable of causing a computer system to perform the method of the invention when the computer program product is run on a computer system.

Before implementation of the invention, the user and the first communications device will share a secret. Also before implementation, the first and second devices will have implemented an identity authentication system, such as Transport Layer Security. This will have authenticated the second device owners with the first device. Outputs from this process may include their organisation name, their internet domain name and possible other contact details. The invention includes the first device delivering the outputs of the identity authentication system, together with the shared secret, for the user to accept or reject, i.e. for the user to authenticate. The secret may be in the form of an image.

According to the invention, there is provided a communications method between a human being, a first communications device, and a second communications device. The communications method includes delivering shared secret data to a user of the first communications device, where responsive to acceptance of the shared secret data by the user of the first communications device, transmitting secure communications data between the first communications device and the second communications device. The shared secret data may be stored locally on the first communications device, and may be in the form of image data, audio data, or text data, video data, or haptic data.

The authenticated data and the shared secret data may be presented and displayed to the user of the first communications device. Additionally, the first communications device may be responsive to the user accepting the presented authenticated data and shared secret data on the first communications device. If the user accepts the authenticated data and shared secret data, the first communications device may receive user input. The presented authenticated data may include a domain internet address and a real world address. The presented authenticated data may be requested from an identity authentication system, and may be transmitted from the identity authentication system to the first communications device. If the user accepts the presented authenticated data and shared secret data, the communications data may be transmitted securely between the first and second communications device.

After successful completion of an existing identity authentication system, such as TLS, the invention is triggered. The computer user is then asked to further authenticate the identity data. The user is presented with key identity data, which is output by the identity authentication system. A shared secret, which is stored locally on the user's device, is also presented for the user to verify, which adds an additional layer of protection, as criminal do not have access to the shared secret. The shared secret assures the computer user of the authenticity of the dialogue, and the information presented on it. This facilitates the further authentication of the identity authentication system's outputs. As a result, best practice rules for avoiding phishing attacks are enforced. Thus, the criminals counterfeiting attempts will fail.

The invention may comprise a system for communications between a first communications device, and a second communications device. The system may include means for delivering shared secret data to the user of the first communications device, means for, responsive to acceptance of the shared secret data by the user of the first communications device, transmitting secure communications data between the first communications device and the second communications device. The shared secret data may be stored locally on the first communication device, and may comprise image data, audio data, or text data, video data, or haptic data.

The system may have the means for presenting authenticated data and the shared secret data to the user of the first communications device. The system may have the means for displaying the shared secret data when the shared secret data is delivered. The system may have the means for requesting the authenticated data from an identity authentication system. The identity authentication system may comprise the means for transmitting authenticated data to the first communications device. The authenticated data may include a domain internet address and a real world address. The first communications device may be responsive to acceptance of the shared secret data and the authenticated data by the user of the first communications device. The system may comprise the means for receiving user input from the user of the first communications device when the user accepts the shared secret data and the authenticated data. There may also be the means for transmitting secure communications data between the first communications device and the second communications device, for when the user accepts the authenticated data and the shared secret data.

There is also provided a computer program product comprising computer program code capable of causing a computer system to perform the above method when the computer program product is run on a computer system. The computer program product may be embodied on a record medium, or a carrier signal, or a read-only memory.

### Brief Description of the Drawings

The invention will be more clearly understood from the following description of some embodiments thereof, given by way of example only, with reference to the accompanying drawings, in which:
FIG. 1 is a schematic of a communications channel between a user and second party.
FIG. 2 is a schematic of inputs used by the invention.
FIG. 3 is a schematic of the components for the user to set the shared secret.
FIG. 4 is a flow chart of the implementation of the invention.
FIG. 5 is a dialogue window of the implementation of the invention.
FIG. 6 is a flow chart of the 'one step' implementation combined with logging in.
Fig. 7 is a dialogue window of an implementation of the invention.

### Detailed Description of the Drawings

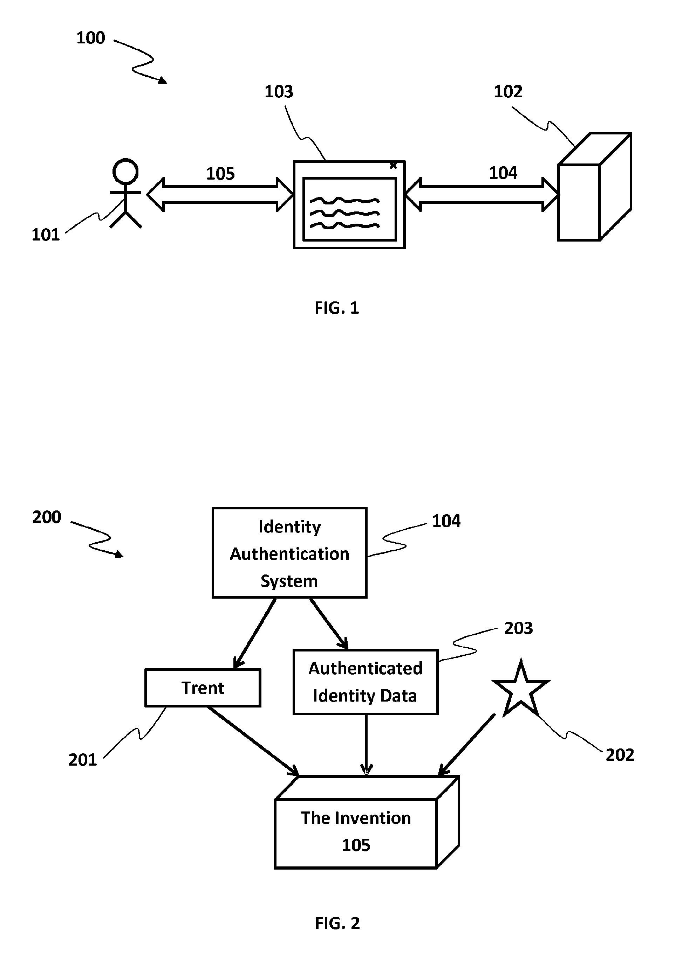

Referring to the drawings and intially to Fig. 1 thereof, there is illustrated a system 100 according to the invention. The system 100 is suitable for communicating between a first communications device 103 and a second communications device 102.

The system 100 comprises means for storing a shared secret data locally on the first communications device 103. The shared secret data may be provided in any suitable form, for example image data, and/or audio data, and/or text data, and/or video data, and/or haptic data.

The system 100 comprises means for requesting authenticated data from an identity authentication system 104 (Fig. 2). The authenticated data may be provided in any suitable form, for example a domain internet address, and/or a real world address. The first communications device 103 may comprise the means for requesting the authenticated data from the identity authentication system 104. Alternatively the second communications device 102 requests the authenticated data from the identity authentication system 104. The identity authentication system 104 comprises means for transmitting the authenticated data to the first communications device 103.

The first communications device 103 comprises means for simultaneously delivering the shared secret data and the authenticated data to a user 101 of the first communications device 103. The shared secret data may be delivered in any suitable manner, for example by displaying the shared secret data to the user 101 of the first communications device 103.

The first communications device 103 comprises means for the user 101 of the first communications device 103 to accept the shared secret data and the authenticated data. The user 101 of the first communications device 103 may accept the shared secret data and the authenticated data by any suitable manner, for example the first communications device 103 may receive user input from the user 101 of the first communications device 103.

The first communications device 103 comprises means for, responsive to acceptance of the shared secret data and the authenticated data, transmitting secure communications data between the first communications device 103 and the second communications device 102.

In further detail, FIG. 1 is a representation 100 of a communications channel between a user 101, and a second party 102. When a user 101 wishes to access a resource, such as, for example, a second communications device 102, provided by a second party, for example, a website, a chain of secure links may need to be established between the user 101 and the second party, in order to prevent against a counterfeiting attack from an outside party. For example, a counterfeiting attack may be a phishing attack. There may be an existing identity authentication system 104 that may be used to span the gap between the user's 101 first communications device 103 and the second party's communication device102, such as, for example, Transport Layer Security (TLS). Once the identity authentication system 104 of the invention 105 is initiated, a method between the two communications devices is initiated, where shared secret data is delivered to the user of the first communications device 103. The shared secret data is stored locally on the first communications device 103, which prevents criminals from gaining access to the shared secret data. The user 101 of the first communications device 103 then decides whether to verify the shared secret data by accepting the data. If the user 101 of the first communications device 103 does accept the shared secret data, the user's 101 communications data is then transmitted securely between the first communications device 103 and the second communications device 102.

When the user 101 of the first communications device 103 is deciding whether to verify the shared secret data, the user 101 of the first communications device 103 is also presented with the authenticated data from the identity authentication system 104. The authenticated data may include the domain internet address and a real world address, which may be requested from the identity authentication system 104, and may be transmitted to the first communications device 103. In contrast, the shared secret data may be stored locally on the first communications device 103, and the shared secret data may be displayed on the first communications device 103 for verification by the user 101. The shared secret data may be in the form of image data, audio data, text data, video data, or haptic data. The user 101 may be able to accept the data by giving input to proceed with interacting with the second device 102. For example, the user 101 may enter login credentials, shake the first communications device 103, or make a recording on the first communications device 103. The first communications device 103 is responsive to the acceptance of the shared secret data and the authenticated data. Once the user 101 of the first communications device 103 accepts the shared secret data and the authenticated data, secure communications data may be transmitted between the first 103 and the second communications devices 102.

An apparatus or computer program product for communications between the first 103 and second communications device comprises means for delivering the shared secret data to the user 101 of the first communications device 103. The shared secret data may be stored locally on the first communications device 103. There may also be means responsive to acceptance of the shared secret data by the user of the first communications device 103. Additionally, there may also be means for transmitting secure communications data between the first communications device 103 and the second communications device 102.

The apparatus or computer program product may also comprise means for presenting authenticated data and the shared secret data to the user 101 of the first communications device 103. The authenticated data may comprise, for example, a domain internet address and a real world address. The apparatus or computer program product may also comprise means for requesting the authenticated data from an identity authentication system. For example, an identity authentication system may be TLS. The identity authentication system may also comprise means for transmitting authenticated data to the first communications device 103. This may allow for the user 101 to be presented with data to authenticate on the first communications device 103. The apparatus may also comprise the means for storing the shared secret data locally on the first communication device 103, and the means for displaying the shared secret data. The shared secret data may be image data, audio data, text data, video data, or haptic data. The user 101 may accept the stored secret data and the authentication data sending user input to the first communications device 103, which comprises means for receiving the user input. Once the user 101 accepts the shared secret data and the authentication data, the first communications device 103 is responsive to user acceptance. There may also be means for transmitting secure communications data between the first communications device 103 and the second communications device 102.

FIG. 2 is a representation of inputs used by the invention. The identity authentication system 104 will output the name of the trusted third party 201, which will be sent to the system of the invention 105. Additionally, for example, TLS may be used as the identity authentication system 104, and in that case, for example, the name of the Certificate authority who issued the TLS Certificate will be the trusted third party 201. The identity authentication system 104 will output authenticated identity information 203, which is the second input for the system of the invention 105. The authenticated identity information 203 may include the name of a business or internet commerce company, along with other authenticated information, such as the domain name that the user 101 wants to access. The device 103 may utilize shared secret data 202, which may be known by the device 103 and the user 101. The shared secret data 202 may be image data, audio data, text data, video data, haptic data, or any other form of media recognizable to the user 101.

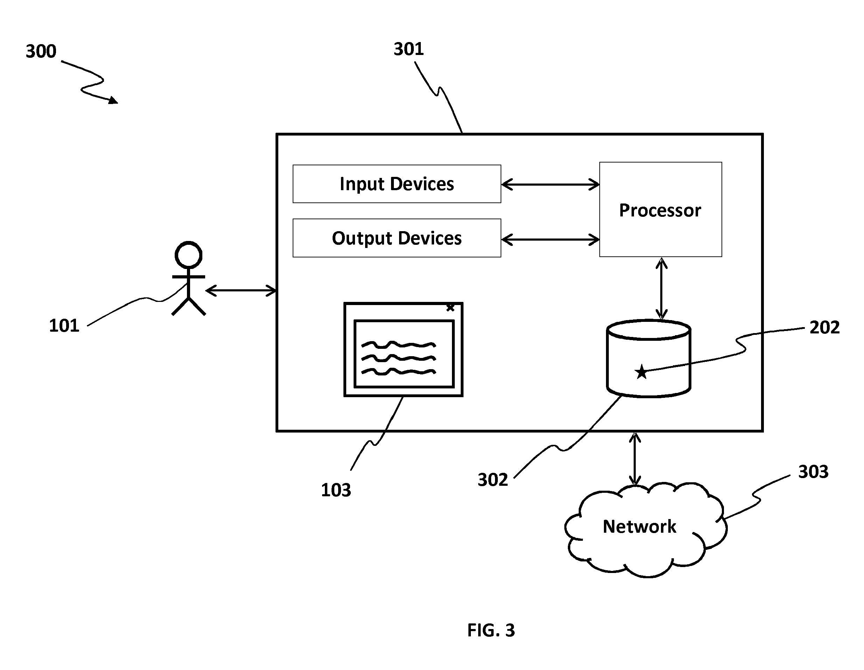

FIG. 3 is a representation of components for the user 101 to set the shared secret data 202. For example, a first communications device 301 may be needed, which may be a personal computer, a tablet, or a mobile phone. The first communications device 103 stores the shared secret data 202. When the first communications device 103 is not running, the shared secret data 202 may be stored in a persistent storage device 302. The shared secret data 202 may be set by the user 101 before the invention is to be used, and may be in any form, for example, image data, audio data, text data, video data, or haptic data. The user 101 may gather the shared secret data 202 from anywhere, and, for example, may be downloaded over the internet. Once the shared secret data 202 is set, it may be stored locally, for example, within the first communications device301. The shared secret data 202 may be protected from malware and any other software which would make it readily available to criminals, and should not be known by anyone except the user 101. An identity authentication system 104 may also be needed, and may need to be set up according to its requirements. For example, if TLS is being used, the second party 102 may have arranged with a Certificate Authority 201 for the creation of a TLS certificate prior to the implementation of the identity authentication system 104.

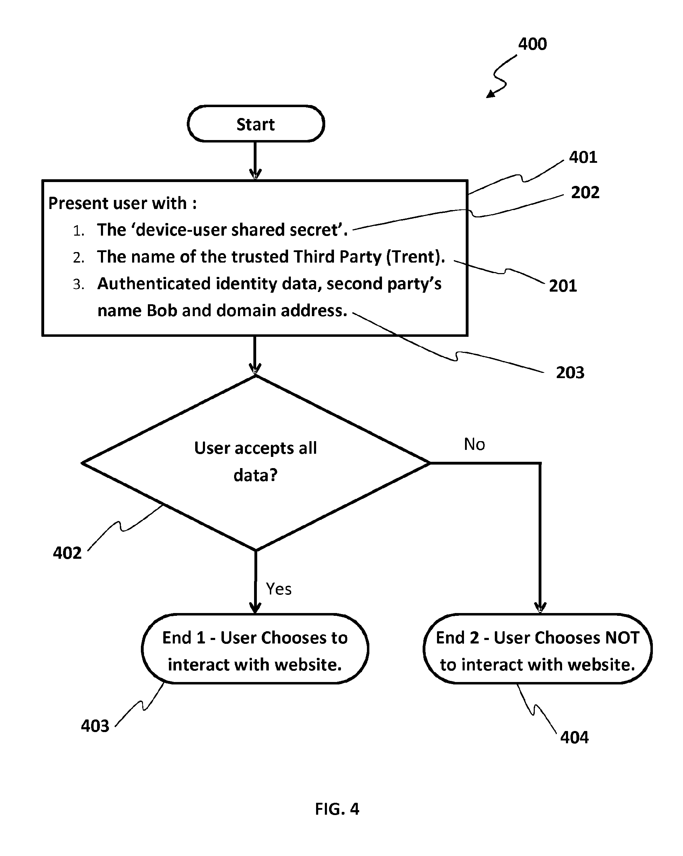

FIG. 4 is a representation of the process an entity would follow according to an embodiment of the invention after the identity authentication system 104 has authenticated the second party's 102 identity. The device 103 may give the user 101 at least three pieces of information 401. The first piece of information may be the shared secret data 202. The second and third pieces of information may be the output from the identity authentication process 104, which may be the name of the trusted third party 201, and the identity data 203. For example, the second and third pieces of information may be the second party's 102 name and the destination domain name. The user 101 may then be required to authenticate all three pieces of information 402. Criminals should not be able to counterfeit the shared secret data 202 because they do not have access to the user's 101 first communication device 301. If the user 101 authenticates the data as valid, the user 101 may proceed to interact 403 with the second party 102, such as, for example, through a website. If the user 101 does not authenticate the data as valid, the user 101 will choose not to interact 404 with the second party 102, such as, for example, through a website.

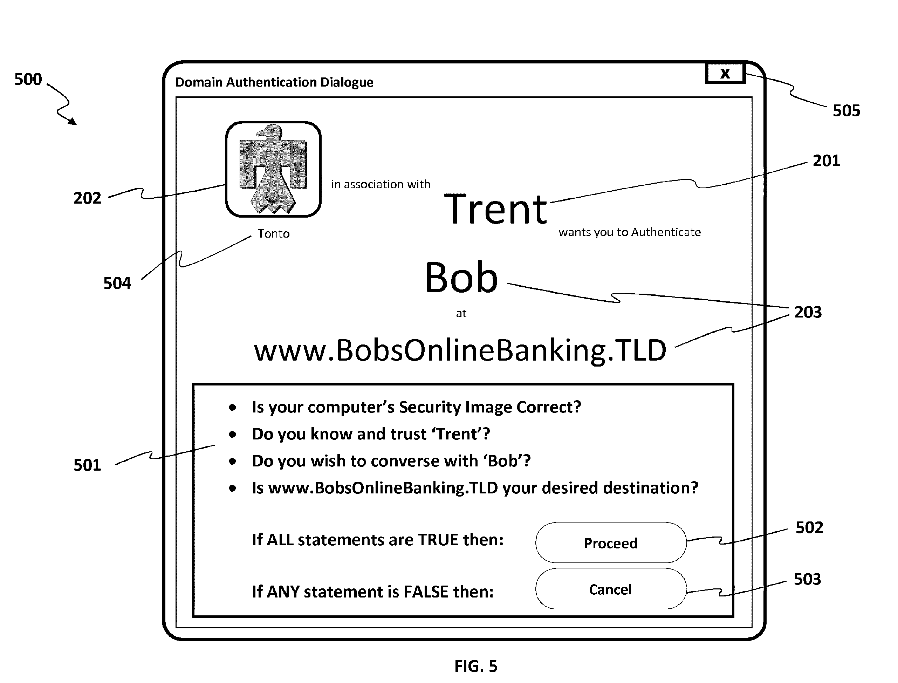

FIG. 5 is a representation of an embodiment of an implementation of the invention according to FIG. 4. An authentication dialog 500 shows an image of a drawing of an eagle as the shared secret data 202. The outputs from the identity authentication system 104 will be displayed in the output for the name of the trusted third party 201 and the identity data 203. For example, if TLS is the identity authentication system 104, the outputs from the TLS certificate would be displayed. All of the data may be presented in the form of a sentence, as shown, for example, in FIG. 5. Additionally, for example, the user 101 may be asked to authenticate the data. For example, in FIG. 5, the user 101 may be asked "Is your computer's security image correct?" 501. An incorrect image may show that the dialogue is a counterfeit created by a criminal. The authentication dialog 500 is an example of how the invention prevents against phishing attacks by having the user 101 examine the outputs of the identity authentication system 104, for example, a TLS certificate. If the user 101 believes that the information displayed 500 is correct, then the user 101, for example, may select the 'Proceed' button 502. If the user 101 does not believe that the information displayed 500 is correct, then the user 101, for example, may select the 'Cancel' button 503. Additionally, for example, if the user 101 does not believe that the information displayed 500 is correct, the user 101 may close the window or dialogue window 505.

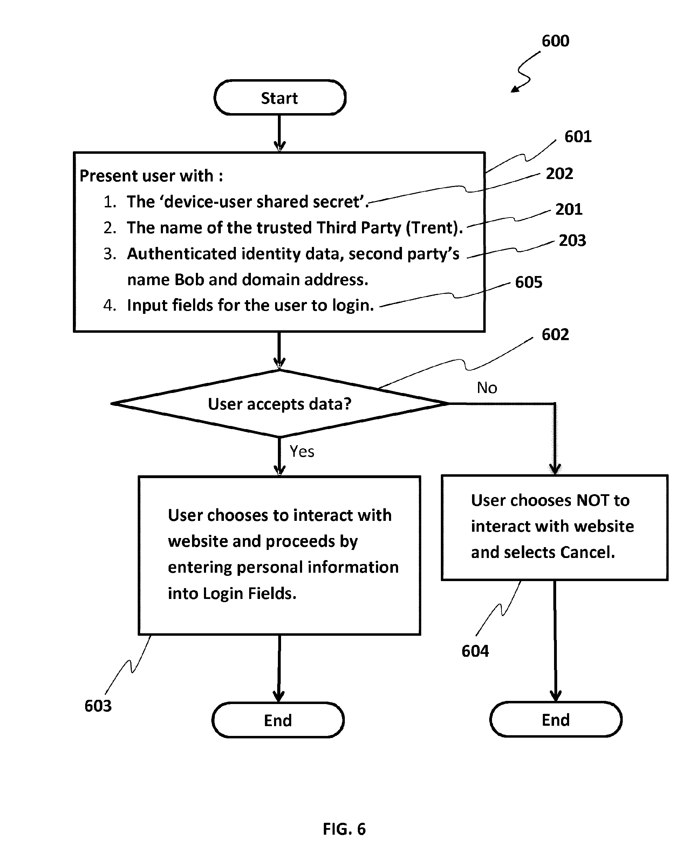

FIG. 6 is a representation of the process an entity may perform to combine the user login with the invention 105 to prevent against phishing attacks. In the first step 601, login input fields 605 may be presented to the user 101 in addition to the shared secret data 202, the name of the trusted third party 201, and the authenticated identity data 203. The user 101 may then decide whether to authenticate the data 602. The user 101 may then accept the data by interacting with the second party 102, such as through a website by entering the user's 101 personal information into the login fields 603. The user 101 may not accept the data by choosing not to interact with the second party 102, such as through a website by not entering the user's 101 personal information, or by selecting 'Cancel' 604.

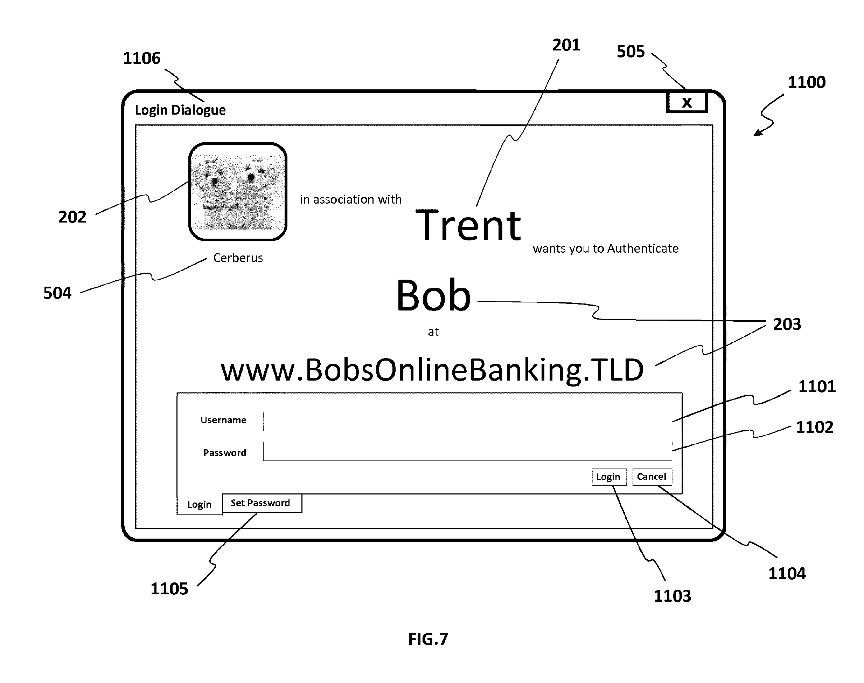

FIG. 7 shows a login dialogue 1100 showing one embodiment of the invention.

Information entered into fields 1101 and 1102 is information that criminals seek to steal during Phishing attacks. Without hacking into the user's hardware device 301 the criminals won't know the shared secret 202. This will prevent them from successfully counterfeiting this dialogue 1100. If the criminals don't use an identity authentication system 104 then this dialogue will not appear at all. If they do use an identity authentication system 104 then this dialogue will appear and the shared secret 202 will be correct. However the user 101 should also authenticate Trent 201 and Bob's authenticated identity data 203. If the user does this, then even Man-in-the-Middle attacks which substitute a valid TLS certificate will fail. This is because the identity data 203 will not belong to the correct Bob 102 that the user 101 was seeking to converse with.

Once the user 101 has authenticated the shared secret 202, Trent 201 and Bob 203, then the user 101 will enter personal information into the login fields 1101 and 1102. Then they select the Login button 1103 to log into the website www.BobsOnlineBanking.TLD. Alternatively if the user 101 is not happy with some, or all, of the data presented then they can choose not to interact with the website. They can do this by selecting the Cancel button 1104 or by closing the window with button 505.

Since changing a user's password involves entering their old password this makes the process prone to attack. The Set Password tab 1105 is shown since it is likely to be incorporated into this solution.

The words "comprises/comprising" and the words "having/including" when used herein with reference to the present invention are used to specify the presence of stated features, integers, steps or components but does not preclude the presence or addition of one or more other features, integers, steps, components or groups thereof.

The embodiments of the invention described previously with reference to the accompanying drawings comprise a computer system and/or processes performed by the computer system. However the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, such as a CD-ROM, or magnetic recording medium, such as a floppy disk or hard disk. The carrier may be an electrical or optical signal which may be transmitted via an electrical or an optical cable or by radio or other means.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The invention is not limited to the embodiments hereinbefore described, with reference to the accompanying drawings, which may be varied in construction and detail.

## Claims

1. A method of communicating between a first communications device and a second communications device, comprising:
delivering a shared secret data to a user of the first communications device, the shared secret data being stored locally on the first communications device;
delivering authenticated data to the user of the first communications device; and
responsive to acceptance of the shared secret data and the authenticated data by the user of the first communications device, transmitting secure communications data between the first communications device and the second communications device.

2. The method of claim 1, wherein the shared secret data and the authenticated data are delivered simultaneously to the user of the first communications device.

3. The method of claim 1 or 2, wherein the authenticated data comprises a domain internet address.

4. The method of any of claims 1 to 3, wherein the authenticated data comprises a real world address.

5. The method of any of claims 1 to 4, wherein the method comprises the step of requesting the authenticated data from an identity authentication system.

6. The method of claim 5, wherein the first communications device requests the authenticated data from the identity authentication system.

7. The method of claim 5, wherein the second communications device requests the authenticated data from the identity authentication system.

8. The method of any of claims 5 to 7, wherein the identity authentication system transmits the authenticated data to the first communications device.

9. The method of any of claims 1 to 8, wherein the method comprises the step of storing the shared secret data locally on the first communications device.

10. The method of any of claims 1 to 9, wherein delivering the shared secret data comprises displaying the shared secret data.

11. The method of any of claims 1 to 10, wherein acceptance of the shared secret data and the authenticated data by the user of the first communications device comprises receiving user input from the user of the first communications device.

12. The method of any of claims 1 to 11, wherein the shared secret data comprises image data, and/or audio data, and/or text data, and/or video data, and/or haptic data.

13. A system for communicating between a first communications device and a second communications device, comprising:
means for delivering a shared secret data to a user of the first communications device, the shared secret data being stored locally on the first communications device;
means for delivering authenticated data to the user of the first communications device; and
means for, responsive to acceptance of the shared secret data and the authenticated data by the user of the first communications device, transmitting secure communications data between the first communications device and the second communications device.

14. The system of claim 13 wherein the system comprises means to receive user input from a user of the first communications device.

15. A computer program product comprising computer program code capable of causing a computer system to perform the method as claimed in any of claims 1 to 12 when the computer program product is run on a computer system.
